(19) Europäisches Patentamt
European Patent Office
Office européen des brevets

(11) **EP 3 299 234 A1**

(12) **EUROPÄISCHE PATENTANMELDUNG**

(43) Veröffentlichungstag:
28.03.2018 Patentblatt 2018/13

(51) Int Cl.:
*B60T 17/22* (2006.01)　　*F16D 66/02* (2006.01)

(21) Anmeldenummer: **17180917.1**

(22) Anmeldetag: **12.07.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **29.07.2016　AT 506912016**

(71) Anmelder: **Siemens AG Österreich**
**1210 Wien (AT)**

(72) Erfinder:
• **Jamnig, Simon Josef**
**8020 Graz (AT)**
• **Kleinschuster, Christoph**
**8043 Graz (AT)**

(74) Vertreter: **Maier, Daniel Oliver**
**Siemens AG**
**Postfach 22 16 34**
**80506 München (DE)**

(54) **PARAMETRISIERUNG EINES MODELLS ZUR VERSCHLEISSPROGNOSE BEI BREMSBELÄGEN**

(57)　Die Erfindung betrifft ein Verfahren zur Parametrisierung eines Modells für die Vorhersage von Verschleiß bei Bremsbelägen insbesondere von Schienenfahrzeugen und eine Vorrichtung zur Durchführung des Verfahrens.

Nach dem erfindungsgemäßen Verfahren werden laufend bei Betriebseinsätzen sowie Wartungs- und Instandhaltungsvorgängen in vorgegebenen Zeitintervallen Umfangsgeschwindigkeiten (v), Anpressdrücke (p), Bremsdauern (tB), optional Kontakttemperaturen (T) von Reibpartnern oder Bremsleistungen (P) sowie Verschleiß (WO) gemessen und daraus allgemeine Konstanten (C) sowie Materialparameter $(\alpha, \beta, \gamma, \delta, \varepsilon)$ bestimmt.

Das Berechnungsverfahren sowie dessen Ergebnisse werden auf einer Ausgabeeinheit (2) der Vorrichtung visualisiert.

Durch die laufende Durchführung des Verfahrens wird der Vorteil erzielt, dass das Modell zur Verschleißprognose mit zunehmender Anzahl an Aktualisierungsvorgängen der allgemeinen Konstante (C) sowie der Materialparameter $(\alpha, \beta, \gamma, \delta, \varepsilon)$ immer präziser wird.

**Beschreibung**

Bremsbeläge von Reibungsbremssystemen unterliegen im Einsatz einem Verschleiß, wodurch kontinuierlich die Belagdicke verringert wird. Unterschreitet ein Bremsbelag seine spezifizierte Mindestdicke, so muss er getauscht werden, da andernfalls Schäden am Bremssystem oder ein Nachlassen der Bremswirkung auftreten können.

Die Erkennung des zulässigen Grenzmaßes erfordert eine laufende Überwachung der Belagdicke durch technisch, zeitlich und finanziell aufwendige Verfahren. Darüber hinaus ist insbesondere bei teuren Sinterbelägen eine präzise Einschätzung der Belagdicke wichtig, um Belagwechsel vor Erreichen der entsprechenden Verschleißgrenzwerte zu vermeiden und somit die zur Verfügung stehende Verschleißreserve des Belags voll auszunützen.

Aus der EP 1 384 638 B1 sind eine Vorrichtung und ein Verfahren zur Überwachung des Funktions- oder Verschleißzustandes von Bremsbelägen oder Bremsscheiben einer Fahrzeugbremse bekannt.

Nach der Lehre dieser Schrift werden mittels Sensoren die Gleitgeschwindigkeit zwischen den Bremsbelägen und der Bremsscheibe während eines Bremsvorgangs, die Temperatur der Reibflächen zumindest eines Bremsbelags, und die Bremskraft während des Bremsvorgangs gemessen, sowie die Bremszeit des Bremsvorganges bestimmt und aus der Gleitgeschwindigkeit, der Temperatur, der Bremskraft, der Bremszeit, der Bremsbelagfläche, sowie aus materialspezifischen Parametern wie einer Korrelationskonstante und Exponenten der Verschleiß des Bremsbelages nach Ablauf der Bremsdauer ermittelt. In der Schrift ist nicht offenbart, wie die materialspezifischen Parameter bestimmt werden.

Weiterhin beschreibt die DE 10 2007 035 332 A1 ein Überwachungsverfahren bezüglich der Stärke von Reibungspartnern einer Fahrzeug-Reibungsbremse. In Abhängigkeit von Geschwindigkeiten, Bremsdrücken und Temperaturen wird basierend auf einer Polynomfunktion ein Verschleiß bestimmt. Die Polynomfunktion umfasst Koeffizienten, die mittels Tests bestimmt werden.

Der Erfindung liegt die Aufgabe zugrunde, ein gegenüber dem Stand der Technik verbessertes Parametrisierungsverfahren anzugeben.

Erfindungsgemäß wird diese Aufgabe gelöst mit einem Parametrisierungsverfahren der eingangs genannten Art, bei dem die Bestimmung der Materialparameter und der allgemeinen Konstante laufend, in festgelegten Zeitintervallen bei Betriebseinsätzen sowie Wartungs- und Instandhaltungsvorgängen des Fahrzeugs erfolgt.

Bremsbelagdicken werden während ausgewählter Wartungs- und Instandhaltungsvorgängen des Fahrzeugs, Bremsparameter wie Umfangsgeschwindigkeit, Anpressdruck, Bremsdauer, Kontakttemperatur und Bremsleistung bei Betriebseinsätzen des Schienenfahrzeugs gemessen.

Aus diesen Informationen werden die Materialparameter sowie die allgemeine Konstante berechnet.

Durch diese Maßnahme wird eine laufende Erweiterung des Einsatzspektrums eines Modells zur Verschleißprognoserechnung erzielt und die Materialparameter werden an dieses sich vergrößernde Spektrum angepasst. Dadurch wird der Vorteil erzielt, dass sich die Genauigkeit der Verschleißprognose kontinuierlich verbessert.

Vorteilhafte Ausgestaltungen der Erfindung ergeben sich aus den Unteransprüchen.

Eine vorteilhafte Ausgestaltung erhält man, wenn zumindest zwei Materialparametersätze und zumindest zwei allgemeine Konstanten ermittelt werden, deren Auswahl in einer Verschleiß-Prognoserechnung in Abhängigkeit des Fahr- und Bremsverhaltens des Fahrzeugs erfolgt.

Durch diese Maßnahme wird eine günstige Anpassung eines Modells zur Verschleißprognose an die realen Verhältnisse (Fahr- und Bremsverhalten eines Fahrzeugs bzw. Verschleißverhalten eines Reibungsbremssystems) erzielt.

Es ist günstig, wenn Mittel zur Bestimmung der Bremsbelagdicke, der Umfangsgeschwindigkeit, des Anpressdrucks, der Bremsdauer, der allgemeinen Konstante sowie der Materialparameter, gegebenenfalls der Kontakttemperatur und der Bremsleistung während eines Parametrisierungsprozesses, Mittel zur Bestimmung von Verschleißraten und eines simulierten Verschleißes sowie zumindest eine Ausgabeeinheit vorgesehen sind.

Durch die Ausgabeeinheit können Bremsparameter (z.B. Anpressdrücke, Umfangsgeschwindigkeiten, Bremsdauern etc.), Bremsbelagdicken, Materialparameter etc. einem Bediener zu Kontrollzwecken und für statistische Auswertungen angezeigt werden.

Nachfolgend wird die Erfindung anhand von Ausführungsbeispielen näher erläutert.

Es zeigen beispielhaft:

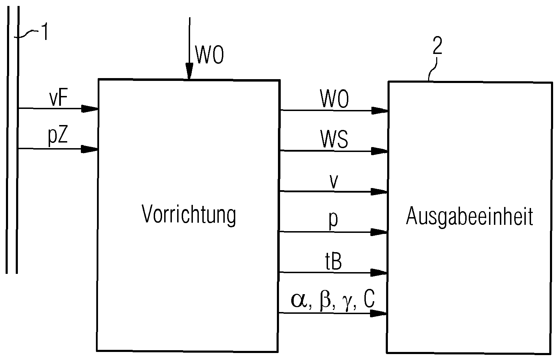

Fig. 1: Eine schematische Darstellung einer erfindungsgemäßen Vorrichtung für die Ermittlung von Materialparametern und Konstanten eines Modells zur Bestimmung der Abnutzung von Bremsbelägen mit einer Ausgabeeinheit.

Die Abnutzung von Bremsbelägen von Schienenfahrzeugen wird mit einem Verfahren bestimmt, bei dem gemäß der Vorschrift

$$\tilde{W} = C \cdot A \cdot p^{\alpha} \cdot v^{\beta} \cdot t_B^{\ \gamma} \cdot P^{\delta} \cdot T^{\varepsilon}$$

eine Verschleißrate W ermittelt wird, mit

    C = Allgemeine Konstante
    A = Belagfläche

p = Anpressdruck
v = Umfangsgeschwindigkeit
tB = Bremsdauer
P = Bremsleistung
T = Kontakttemperatur von Reibpartnern
$\alpha$ = Materialparameter Druck
$\beta$ = Materialparameter Geschwindigkeit
$\gamma$ = Materialparameter Bremsdauer
$\delta$ = Materialparameter Bremsleistung
$\varepsilon$ = Materialparameter Temperatur

Wesentliche Faktoren bei der Bestimmung der Verschleißrate $\tilde{W}$ sind Belagfläche A, Anpressdruck p, Umfangsgeschwindigkeit v einer Bremsscheibe in einem Kontakt mit einem Bremsbelag, und Bremsdauer tB. Die Verwendung der Kontakttemperatur T und der Bremsleistung P ist optional, d.h. nicht zwingend erforderlich.

Während die Belagfläche A sich aus den konstruktiven Merkmalen der Bremse ergibt, werden der Anpressdruck p, die Umfangsgeschwindigkeit v und die Bremsdauer tB während des Betriebs laufend ermittelt. Die Ermittlung des Anpressdrucks p und der Umfangsgeschwindigkeit v erfolgt aus der Erfassung des Bremszylinderdrucks pZ sowie der Fahrgeschwindigkeit vF und, unter Verwendung der geometrischen und kinematischen Eigenschaften des Bremssystems, einer rechnerischen Transformation dieser Größen.

Die Kontakttemperatur T und die Bremsleistung P können bei Verfügbarkeit geeigneter Rechenmodelle mittels Simulation bestimmt und in obiger Vorschrift optional verwendet werden. Falls unter bestimmten Betriebsbedingungen einer oder auch beide der genannten Werte nicht zur Verfügung stehen, wird dies dadurch berücksichtigt, dass die entsprechenden Materialparameter $\varepsilon$, $\delta$=0 gesetzt werden und so die jeweils zugehörigen Variablen Kontakttemperatur T sowie Bremsleistung P in der Vorschrift wirkungslos bleiben.

Die Bestimmung der Materialparameter $\alpha$,$\beta$,y, $\delta$,$\varepsilon$ und der allgemeinen Konstante C erfolgt im Betrieb eines Fahrzeugs in einem Streckennetz, wobei das Fahrzeug mit geeigneten Systemen zur Erfassung von Bremszylinderdruck pZ und Fahrgeschwindigkeit vF sowie optional zur Simulation von Kontakttemperatur T und Bremsleistung P ausgestattet ist.

Im Rahmen von ausgewählten Wartungsvorgängen werden überdies die Bremsen untersucht und der gesamte gemessene Verschleiß W0, d.h. die Abnutzung der Bremsbeläge bzw. Bremsbelagdicken während des Betriebs ermittelt.

Aus dem zeitlichen, numerischen Integral der Funktion

$$\tilde{W} = C \cdot A \cdot p^{\alpha} \cdot v^{\beta} \cdot t_{B}^{\ \gamma} \cdot P^{\delta} \cdot T^{\varepsilon}$$

ergibt sich der Bremsbelag-Verschleiß in einem bestimmten Zeitraum. In diesem Zeitraum gemessene Werte für den Verschleiß WO werden in das Integral eingesetzt und zusammen mit der Belagfläche A, Anpressdrücken p, Umfangsgeschwindigkeiten v, Bremsdauern tB sowie optional Kontakttemperaturen T oder Bremsleistungen P werden die Materialparameter $\alpha$,$\beta$,$\gamma$,$\delta$,$\varepsilon$ und die allgemeine Konstante C mittels eines iterativen, automatisch ablaufenden Rechenprozesses bestimmt. Dabei wird ein numerisches Verfahren, wie es üblicherweise zur Lösung von nichtlinearen Gleichungssystemen zur Anwendung kommt, wie beispielsweise ein sogenanntes Newton- oder Bisektionsverfahren, eingesetzt. Auf Basis der Ergebnisse für die Materialparameter $\alpha$,$\beta$,$\gamma$,$\delta$,$\varepsilon$ und die allgemeine Konstante C können zusammen mit der Belagfläche A, gemessenen Anpressdrücken p, Umfangsgeschwindigkeiten v, Bremsdauern tB sowie optional Kontakttemperaturen T oder Bremsleistungen P Verschleiß-Prognoserechnungen durchgeführt werden, d.h. Werte für einen simulierten Verschleiß WS ermittelt werden.

Es ist denkbar, dass sich in Abhängigkeit des Fahr- und Bremsverhaltens aus dem iterativen Rechenprozess mehr als ein Materialparametersatz $\alpha$,$\beta$,$\gamma$,$\delta$,$\varepsilon$ als geeignet ergibt, d.h. beispielsweise lässt sich für Bremsungen mit geringen Anpressdrücken p das Bremsbelag-Verschleißverhalten des Fahrzeugs mit einem Materialparametersatz $\alpha$1,$\beta$1,$\gamma$1,$\delta$1,$\varepsilon$1 präzise abbilden, für Bremsungen mit hohen Anpressdrücken p das Bremsbelag-Verschleißverhalten des Fahrzeugs beispielsweise mit einem Materialparametersatz $\alpha$2,$\beta$2,$\gamma$2,$\delta$2,$\varepsilon$2. Aus diesem Grund werden für die Verschleiß-Prognoserechnung auf Grundlage des erfindungsgemäßen Parametrisierungsprozesses zumindest zwei Materialparametersätze ($\alpha$1,$\beta$1,$\gamma$1,$\delta$1,$\varepsilon$1; $\alpha$2,$\beta$2,$\gamma$2,$\delta$2,$\varepsilon$2) sowie zwei allgemeine Konstanten (C1, C2) eingesetzt.

Der Parametrisierungsprozess wird in festgelegten Intervallen während des Betriebs des Fahrzeugs durchgeführt, d.h. die Materialparameter $\alpha$,$\beta$,$\gamma$,$\delta$,$\varepsilon$ und die allgemeine Konstante C werden laufend aktualisiert, wodurch ein sich stetig vergrößerndes Betriebsspektrum des Fahrzeugs abgebildet wird und sich somit eine steigende Genauigkeit der Verschleiß-Prognoserechnung ergibt.
Das Intervall des Parametrisierungsprozesses wird mit zunehmender Zahl durchgeführter Parametrisierungsprozesse verlängert bzw. ist flexibel. So kann es beispielsweise bei Veränderung des Streckennetzes und einer dadurch absehbaren Veränderung des Fahr- und Bremsverhaltens des Fahrzeuges auch verkürzt werden.

Das Parametrisierungsverfahren wird mittels einer in Fig. 1 gezeigten Vorrichtung, die über Kabelleitungen sowie Sende- und Empfangseinheiten einer Funkschnittstelle mit einem Datenbus 1 eines Fahrzeugs und einer Ausgabeeinheit 2 verbunden ist, durchgeführt.

Über den Datenbus 1 werden während des Betriebs des Fahrzeugs Bremszylinderdruck-Daten pZ und Fahrgeschwindigkeits-Daten vF im Zeitverlauf erfasst und Bremsdauern tB gebildet. Die Bremszylinderdruck-Daten pZ werden rechnerisch, basierend auf konstruktiven Details eines Bremssystems des Fahrzeugs, in Anpressdrücke p transformiert, die Fahrgeschwindigkeits-Daten vF in Umfangsgeschwindigkeiten v einer Bremsscheibe. Über das zeitliche, numerische Integral der Vorschrift

$$\tilde{W} = C \cdot A \cdot p^{\alpha} \cdot v^{\beta} \cdot t_B^{\gamma} \cdot P^{\delta} \cdot T^{\varepsilon}$$

und während Wartungs- und Instandhaltungsvorgängen in festgelegten Intervallen gemessenem Verschleiß WO (bzw. gemessene Bremsbelagdicken) sowie Anpressdrücken p, Umfangsgeschwindigkeiten v und Bremsdauern werden Materialparameter $\alpha, \beta, \gamma$ und eine allgemeine Konstante C bestimmt. Die Materialparameter $\delta$ und $\varepsilon$ werden gleich 0 gesetzt und spielen in dem Berechnungsprozess keine Rolle, da in diesem Ausführungsbeispiel die Parametrisierung ohne Bremsleistungs- und Kontakttemperaturinformationen (P, T) erfolgt.

Über eine Ausgabeeinheit 2 werden die Ergebnisse für die Materialparameter $\alpha, \beta, y$, die allgemeine Konstante C sowie Intervalle für den Anpressdruck p und die Umfangsgeschwindigkeit v, welche das Einsatzspektrum des Fahrzeugs und somit einen Gültigkeitsbereich für die Materialparameter $\alpha, \beta, \gamma$ und die Konstante C definieren, angezeigt. Weiterhin wird in Diagrammform und in Wertetabellen ein auf Basis der Materialparameter $\alpha$, $\beta, \gamma$ und der allgemeinen Konstante C simulierter Verschleiß WS in Abhängigkeit der Materialparameter $\alpha, \beta$, $\gamma$ und der allgemeinen Konstante C zusammen mit Werten gemessenen Verschleißes WO visualisiert. Dadurch können Einschätzungen über die Abweichung zwischen dem gemessenen Verschleiß WO und dem simulierten Verschleiß WS bzw. Sensitivitätsanalysen durchgeführt werden.

Ferner erfolgt eine Darstellung des simulierten Verschleißes WS in Abhängigkeit der Bremsdauer tB, des Anpressdrucks p und der Umfangsgeschwindigkeit v.

Die erfindungsgemäße Vorrichtung ist in einem Fahrwerk eines Schienenfahrzeugs angeordnet, die Ausgabeeinheit 2 in einem Führerstand des Schienenfahrzeugs.

Dabei handelt es sich um eine günstige Lösung. Erfindungsgemäß ist es jedoch auch vorstellbar, die Ausgabeeinheit 2 beispielsweise in einem Wartungsstand oder in dem Fahrwerk anzuordnen.

Ferner ist es auch denkbar, den Bildschirm eines tragbaren Rechners als Ausgabeeinheit 2 einzusetzen, wobei dieser Rechner über eine Funkschnittstelle mit der Vorrichtung verbunden ist.

Darüber hinaus kann die Vorrichtung auch außerhalb des Fahrzeugs angeordnet sein und über Kabelleitungen oder eine Funkschnittstelle mit einer fahrzeugseitigen Einheit, über welche Bremszylinderdruck pZ, Fahrgeschwindigkeit vF und Bremsdauern tB erfasst und an die Vorrichtung übermittelt werden, verbunden sein.

Liste der Bezeichnungen

| 1 | Datenbus |
|---|----------|
| 2 | Ausgabeeinheit |
| C | Allgemeine Konstante |
| A | Belagfläche p Anpressdruck |
| pZ | Bremszylinderdruck |
| vF | Fahrgeschwindigkeit |
| v | Umfangsgeschwindigkeit |
| tB | Bremsdauer |
| P | Bremsleistung |
| T | Kontakttemperatur |
| $\alpha$ | Materialparameter Druck |
| $\beta$ | Materialparameter Geschwindigkeit |
| $\gamma$ | Materialparameter Bremsdauer |
| $\delta$ | Materialparameter Bremsleistung |
| $\varepsilon$ | Materialparameter Temperatur |
| W0 | Gemessener Verschleiß |
| WS | Simulierter Verschleiß |
| $\tilde{W}$ | Verschleißrate |

**Patentansprüche**

1. Verfahren zur Bestimmung der Abnutzung von Bremsbelägen von Fahrzeugen, insbesondere Schienenfahrzeugen, mit einem Parametrisierungsprozess, bei dem aus Messungen Bremsbelagdicken, Umfangsgeschwindigkeiten, Anpressdrücke, Bremsdauern, Kontakttemperaturen von Reibpartnern, Bremsleistungen, allgemeine Konstanten sowie Materialparameter ermittelt werden, **dadurch gekennzeichnet, dass** die Bestimmung der Materialparameter ($\alpha, \beta, \gamma, \delta, \varepsilon$) und der allgemeinen Konstante (C) laufend, in festgelegten Zeitintervallen bei Betriebseinsätzen sowie Wartungs- und Instandhaltungsvorgängen des Fahrzeugs erfolgt.

2. Verfahren nach Anspruch 1, **dadurch gekennzeichnet, dass** zumindest zwei Materialparametersätze ($\alpha1, \beta1, \gamma1, \delta1, \varepsilon1$; $\alpha2, \beta2, \gamma2, \delta2, \varepsilon2$) und zumindest zwei allgemeine Konstanten (C1, C2) ermittelt werden, deren Auswahl in einer Verschleiß-Prognoserechnung in Abhängigkeit des Fahr- und Bremsverhaltens des Fahrzeugs erfolgt.

3. Verfahren nach Anspruch 1, **dadurch gekennzeichnet, dass** die Bremsbelagdicken bei Wartungs- und Instandhaltungsvorgängen des Fahrzeugs gemessen werden.

4. Verfahren nach Anspruch 1, **dadurch gekennzeichnet, dass** die Umfangsgeschwindigkeit (v), der Anpressdruck (p), die Bremsdauer (tB), die Kontakttemperatur (T) und die Bremsleistung (P) bei Betriebseinsätzen des Fahrzeugs gemessen werden.

**5.** Vorrichtung welche zur Durchführung eines der Verfahren nach einem der Ansprüche 1 bis 4 eingerichtet ist, **dadurch gekennzeichnet, dass** Mittel zur Bestimmung der Bremsbelagdicke, der Umfangsgeschwindigkeit (v), des Anpressdrucks (p), der Bremsdauer (tB), der allgemeinen Konstante (C) sowie der Materialparameter ($\alpha,\beta,\gamma,\delta,\varepsilon$), gegebenenfalls der Kontakttemperatur (T) und der Bremsleistung (P) während eines Parametrisierungsprozesses, Mittel zur Bestimmung von Verschleißraten ($\tilde{W}$) und eines simulierten Verschleißes (WS) sowie zumindest eine Ausgabeeinheit 2 vorgesehen sind.

**6.** Vorrichtung nach Anspruch 5, **dadurch gekennzeichnet, dass** die zumindest eine Ausgabeeinheit 2 in einem Wagenkasten angeordnet ist.

**7.** Vorrichtung nach Anspruch 5, **dadurch gekennzeichnet, dass** die zumindest eine Ausgabeeinheit 2 in einem Fahrwerk angeordnet ist.

**8.** Vorrichtung nach Anspruch 5, **dadurch gekennzeichnet, dass** die zumindest eine Ausgabeeinheit 2 in einer Recheneinheit außerhalb des Fahrzeugs angeordnet ist.

1

vF

pZ

WO

Vorrichtung

WO

WS

v

p

tB

$\alpha, \beta, \gamma, C$

2

Ausgabeeinheit

Europäisches
Patentamt

European
Patent Office

Office européen
des brevets

## EUROPÄISCHER RECHERCHENBERICHT

Nummer der Anmeldung

EP 17 18 0917

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | EP 1 384 638 A2 (KNORR BREMSE SYSTEME [DE]) 28. Januar 2004 (2004-01-28) * Zusammenfassung * * Ansprüche 1,6 * * Abbildung 2 * ----- | 1-8 | INV. B60T17/22 F16D66/02 |
| A | EP 0 598 997 A1 (VOLKSWAGEN AG [DE]) 1. Juni 1994 (1994-06-01) * Zusammenfassung * * Anspruch 1 * * Abbildung 1 * ----- | 1-8 | |
| A | DE 101 27 480 A1 (CONTINENTAL TEVES AG & CO OHG [DE]) 28. März 2002 (2002-03-28) * Zusammenfassung * * Ansprüche 1-3 * * Abbildung 1 * ----- | 1-8 | |

RECHERCHIERTE SACHGEBIETE (IPC)

B60T
F16D

Der vorliegende Recherchenbericht wurde für alle Patentansprüche erstellt

| Recherchenort | Abschlußdatum der Recherche | Prüfer |
|---|---|---|
| München | 8. Februar 2018 | Christensen, Juan |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 17 18 0917

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-02-2018

| Im Recherchenbericht angeführtes Patentdokument | Datum der Veröffentlichung | Mitglied(er) der Patentfamilie | Datum der Veröffentlichung |
|---|---|---|---|
| EP 1384638 A2 | 28-01-2004 | AT 443642 T<br>DE 10233844 A1<br>EP 1384638 A2 | 15-10-2009<br>12-02-2004<br>28-01-2004 |
| EP 0598997 A1 | 01-06-1994 | EP 0598997 A1<br>ES 2079935 T3 | 01-06-1994<br>16-01-1996 |
| DE 10127480 A1 | 28-03-2002 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1384638 B1
- DE 102007035332 A1